# EUROPEAN PATENT APPLICATION

(11) **EP 3 614 761 A1**
(43) Date of publication of application: **26.02.2020**
(21) Application number: 17911494.7
(22) Date of filing: 31.05.2017
(51) Int. Cl.: H04W 72/04

(54) **METHOD FOR SENDING AND DETECTING DISCOVERY SIGNAL, BASE STATION, AND USER EQUIPMENT**

(71) Applicant: Huawei Technologies Co., Ltd., Longgang District Shenzhen, Guangdong 518129 (CN)
(72) Inventor: REN, Zhanyang, Shenzhen Guangdong 518129 (CN); ZHANG, Wurong, Shenzhen Guangdong 518129 (CN); LI, Zhenyu, Shenzhen Guangdong 518129 (CN); HAN, Jinxia, Shenzhen Guangdong 518129 (CN)
(74) Representative: Epping - Hermann - Fischer
(86) International application number: PCT/CN2017/086717
(87) International publication number: WO 2018/218545

(57) **Abstract**

Embodiments of this application provide a method for sending a discovery signal, a method for detecting a discovery signal, a base station, and user equipment, and relate to a communications field, so that enhanced discovery signal transmission can be supported by using a new discovery signal measurement timing configuration, to implement accessing UE in a weak coverage scenario, thereby ensuring cell coverage performance. The method is: performing, by a base station, first carrier sense for first R subframes in a time sequence of one radio frame in a first discovery signal measurement timing DMTC window; and if the first carrier sense succeeds, sending, by the base station, a discovery signal in M consecutive subframes, wherein M is greater than or equal to 2, and a first sub frame of the M consecutive subframes is located in the radio frame in the first DMTC window; and both M and R are natural numbers. The embodiments of this application are used to send an eDRS and a DRS.

## Description

### TECHNICAL FIELD

This application relates to the communications field, and in particular, to a method for sending a discovery signal, a method for detecting a discovery signal, a base station, and user equipment.

### BACKGROUND

In an MF (MulteFire) system, user equipment (User Equipment, UE) implements a network access process by receiving a discovery signal (discovery signal, DRS) of a base station device. Usually, a base station can send a discovery signal to a plurality of UEs only by using one subframe. The signal includes a primary synchronization signal (primary synchronization signal, PSS), an MF-primary synchronization signal (MF-primary synchronization signal, MF-PSS), a secondary synchronization signal (secondary synchronization signal, SSS), an MF-secondary synchronization signal (MF-secondary synchronization signal, MF-SSS), and an MF-physical broadcast channel (physical broadcast channel, MF-PBCH). The UE receives the DRS and parses the PSS, the MF-PSS, the SSS, and the MF-SSS, to obtain a physical cell identifier (physical cell ID, PCI), parses the MF-PBCH to obtain information such as system bandwidth, and implements clock and frequency synchronization with the base station. The DRS is transmitted in the subframe and occupies twelve or fourteen orthogonal frequency division multiplexing (orthogonal frequency division multiplexing, OFDM) symbols, where the PSS, the SSS, the MF-PSS, and the MF-SSS each occupy one symbol. In addition, the MF-PBCH occupies six orthogonal frequency division multiplexing (orthogonal frequency division multiplexing, OFDM) symbols.

When the MF system is deployed in a scenario such as a port, a wharf, and an automated production flow, because the user equipment usually has a mobility, during movement of the user equipment, a radio signal sent by the base station is easily blocked by various objects between the user equipment and the base station. Consequently, radio signal quality is relatively poor, and the user equipment cannot normally receive the radio signal. According to another aspect, because a relatively large quantity of user equipment, during the movement, a case in which radio signals are blocked by each other probably occurs, and the user equipment cannot normally receive data sent by the base station. In this case, there is a high requirement for quality of a signal delivered by the base station, and the base station needs to provide a better radio coverage capability to respond to a scenario of relatively poor radio signal quality.

In an existing MF system, a DRS is transmitted in one subframe. When UE is in a weak coverage scenario with relatively poor signal quality, a case in which the DRS cannot be normally received occurs. Therefore, the UE cannot obtain a synchronization signal and MF-PBCH information, so that the UE cannot perform clock and frequency synchronization with a base station, and the UE cannot obtain system information, so that the UE cannot access a core network by using the base station.

### SUMMARY

Embodiments of this application provide a method for sending a discovery signal, a method for detecting a discovery signal, a base station, and user equipment, so that enhanced discovery signal transmission is supported by using a new discovery signal measurement timing configuration, to implement accessing UE in a weak coverage scenario, thereby improving cell coverage performance.

According to an aspect, a method for sending a discovery signal is provided. The method includes: performing, by a base station, first carrier sense for first R subframes in a time sequence of one radio frame in a first discovery signal measurement timing (Discovery Signal Measurement Timing, DMTC) window; and if the first carrier sense succeeds, sending, by the base station, the discovery signal in M consecutive subframes, wherein M is greater than or equal to 2; a first subframe of the M consecutive subframes is located in the radio frame in the first DMTC window; and the first DMTC window includes N subframes, and both M and R are natural numbers. That the first carrier sense succeeds may be that the first carrier sense is successfully performed before the first subframe, and a channel is determined idle. In other words, in this embodiment of this application, the radio frame in the first DMTC window may be divided into two parts. The first carrier sense may be attempted to be performed starting from the first subframe, that is, a subframe 0. If the first carrier sense is successfully performed in a range of first R subframes, the discovery signal may be sent in a plurality of consecutive subframes. Compared with the prior art in which a discovery signal DRS occupies one subframe, in this application, enhanced discovery signal transmission can be supported by using a new discovery signal measurement timing configuration, to implement accessing UE in a weak coverage scenario, thereby improving cell coverage performance.

In a possible design, the first DMTC window includes the N subframes; and if N is less than or equal to 11-M, R is less than or equal to N; or if N is greater than 11-M, R is less than or equal to 11-M. In other words, in the radio frame in a DMTC, at most 11-M subframes may be used to perform the first carrier sense, and because the discovery signal occupies M subframes, so that the M consecutive subframes may be in the radio frame, and do not conflict with a format of a discovery signal as specified in a location of a subframe 0 outside an existing DMTC window.

In a possible design, discovery signals carried in subframes of the M consecutive subframes may be the same or different. For example, the M consecutive subframes may repeatedly send a plurality of DRSs, that is, enhanced DRSs, or may send a newly defined enhanced discovery signal (Enhanced Discovery Signal, eDRS). A core difference between the eDRS and the DRS is that a quantity of subframes occupied when the eDRS is sent is different from a quantity of subframes occupied when the DRS is sent. The DRS occupies one subframe, while the eDRS may occupy a plurality of subframes.

In a possible design, the first DMTC window includes the N subframes, and a subframe number is carried by first Q subframes in the M consecutive subframes, where Q is less than or equal to M; and if N is less than or equal to 11-Q, R is less than or equal to N; or if N is greater than 11-Q, R is less than or equal to 11-Q. In other words, at most 11-Q subframes in the radio frame in the first DTMC window may be used to perform the first carrier sense. Because the subframe number is carried by the first Q subframes in the M continuous subframes, UE may determine, based on the subframe number of the first Q subframes, the format of the discovery signal in the M continuous subframes sent by the base station.

In a possible design, before the base station sends the discovery signal, the base station determines the format of the discovery signal in the M consecutive subframes based on the subframe number of the first Q subframes.

In a possible design, if the first carrier sense fails, the base station performs second carrier sense for a subframe, other than the first R subframes, in a time sequence of one radio framethethe in the first DMTC window, alternatively, performs the second carrier sense for a subframe, other than the first R subframes, in the first DMTC window. In other words, if the first carrier sense is unsuccessfully performed in first R subframes, the second carrier sense may be performed before starting from the first subframe, other than the R subframes, in the radio frame. For example, the first carrier sense is sending the foregoing eDRS for configuration. If the first carrier sense is unsuccessfully performed in the first R subframes, there is no eDRS sending opportunity. The second carrier sense that is configured for the DRS is performed for a subframe other than the R subframes of the radio frame, so that a DRS sending opportunity can be obtained. A time in which an idle channel is needed when the first carrier sense succeeds is not shorter than a time in which an idle channel is needed when the second carrier sense succeeds. The first carrier sense may be applicable to sending of the eDRS occupying more than one subframe, and the second carrier sense may be applicable to sending of the DRS occupying no more than one subframe.

In a possible design, the first DMTC window includes the N subframes; and if N is less than or equal to 11-Q, a start subframe in the M consecutive subframes is in the N subframes; or if N is greater than 11-Q, the start subframe in the M consecutive subframes is in first 11-Q subframes in the radio frame, where the subframe number is carried by the first Q subframes in the M consecutive subframes. That is, the at most 11-Q subframes may be used to perform the first carrier sense.

In a possible design, the first DMTC window includes one or more radio frames, or a part of one radio frame.

According to another aspect, a method for detecting a discovery signal is provided. User equipment UE detects a discovery signal in first R subframes of one radio frame in a first discovery signal measurement timing DMTC window, where the discovery signal is carried in M consecutive subframes, and M is greater than or equal to 2; and a first subframe of the M consecutive subframes is located in the radio frame in the first DMTC window, and both M and R are natural numbers. In other words, for the UE, the UE considers that a base station starts to send the discovery signal in the first R subframes of the radio frame in the first DMTC window, and the UE only needs to detect, in the first R subframes, whether to start to receive the discovery signal.

In a possible design, the first DMTC window includes N subframes; and if N is less than or equal to 11-M, R is less than or equal to N; or if N is greater than 11-M, R is less than or equal to 11-M. In other words, a range of the first R subframes is determined based on a quantity of subframes occupied by the first DMTC window and a quantity of subframes carrying the discovery signal, so that a subframe occupied when the discovery signal is sent is in the radio frame, and does not conflict with a format of a discovery signal as specified in a location of a subframe 0 outside an existing DMTC window.

In a possible design, the first DMTC window includes the N subframes; and a subframe number is carried by first Q subframes in the M consecutive subframes, where Q is less than or equal to M; and if N is less than or equal to 11-Q, R is less than or equal to N; or if N is greater than 11-Q, R is less than or equal to 11-Q. The UE determines a format of the M consecutive subframes based on the subframe number of the first Q subframes. In other words, even if the M consecutive subframes belong to a plurality of radio frames, the UE may determine the format of the M consecutive subframes based on the subframe number of the first Q subframes.

According to still another aspect, a base station is provided. The base station includes a receiving module, a sending module, and a processing module, where the receiving module is configured to perform first carrier sense for first R subframes in a time sequence of one radio frame in a first discovery signal measurement timing DMTC window; the processing module is configured to determine whether the first carrier sense succeeds; and if the first carrier sense succeeds, the sending module is configured to send a discovery signal in M consecutive subframes, where M is greater than or equal to 2, and a first subframe of the M consecutive subframes is located in one radio frame in the first DMTC window, and both M and R are natural numbers.

In a possible design, the first DMTC window includes N subframes, and if N is less than or equal to 11-M, R is less than or equal to N; or if N is greater than 11-M, R is less than or equal to 11-M.

In a possible design, discovery signals carried in subframes of the M consecutive subframes may be the same or different.

In a possible design, a subframe number is carried by the first Q subframes in the M consecutive subframes, where Q is less than or equal to M; and if N is less than or equal to 11-Q, R is less than or equal to N; or if N is greater than 11-Q, R is less than or equal to 11-Q.

In a possible design, before the sending module is configured to send the discovery signal, the processing module is configured to determine, based on the subframe number carried by the first Q subframes, a format of the discovery signal in the M consecutive subframes.

In a possible design, if the first carrier sense fails, the receiving module is configured to perform second carrier sense for a subframe, other than the first R subframes, in a time sequence of one radio framethethe in the first DMTC window, alternatively, perform the second carrier sense for a subframe, other than the first R subframes, in the first DMTC window.

In a possible design, if the second carrier sense succeeds, the sending module sends the discovery signal in the subframe in the first DMTC window.

In a possible design, the first DMTC window includes the N subframes, and if N is less than or equal to 11-Q, a start subframe in the M consecutive subframes is located in the N subframes; or if N is greater than 11-Q, the start subframe in the M consecutive subframes is in first 11-Q subframes in the radio frame in the first DMTC window, where the subframe number is carried by the first Q subframes in the M consecutive subframes.

In a possible design, the first DMTC window includes one or more radio frames, or a part of one radio frame.

According to still another aspect, user equipment UE is provided. The UE includes a receiving module, where the receiving module is configured to detect a discovery signal in first R subframes of one radio frame in a first discovery signal measurement timing DMTC window, where the discovery signal is carried in M consecutive subframes, and M is greater than or equal to 2; and a first subframe of the M consecutive subframes is located in the radio frame in the first DMTC window, and both M and R are natural numbers.

In a possible design, the first DMTC window includes N subframes, where if N is less than or equal to 11-M, R is less than or equal to N; or if N is greater than 11-M, R is less than or equal to 11-M. The receiving module is further configured to receive the discovery signal. The UE further includes a processing module, where the processing module is configured to determine a format of the M consecutive subframes based on a subframe number of first Q subframes.

In a possible design, the first DMTC window includes the N subframes; and the subframe number is carried by the first Q subframes in the M consecutive subframes, where Q is less than or equal to M; and if N is less than or equal to 11-Q, R is less than or equal to N; or if N is greater than 11-Q, R is less than or equal to 11-Q.

In a possible design, the UE determines, based on the subframe number of the first Q subframes, the format of the M consecutive subframes.

According to yet another aspect, a base station is provided. The base station includes a receiver, a transmitter, and a processor, where the receiver is configured to perform first carrier sense for first R subframes in a time sequence of one radio frame in a first discovery signal timing DMTC window; and if the first carrier sense succeeds, the transmitter is configured to send a discovery signal in M consecutive subframes, where M is greater than or equal to 2; and a first subframe of the M consecutive subframes is located in the radio frame in the first DMTC window, and both M and R are natural numbers.

In a possible design, the first DMTC window includes N subframes, where if N is less than or equal to 11-M, R is less than or equal to N; or if N is greater than 11-M, R is less than or equal to 11-M.

In a possible design, discovery signals carried in subframes of the M consecutive subframes may be the same or different.

In a possible design, the first DMTC window includes the N subframes; and a subframe number is carried by first Q subframes in the M consecutive subframes, where Q is less than or equal to M; and if N is less than or equal to 11-Q, R is less than or equal to N; or if N is greater than 11-Q, R is less than or equal to 11-Q.

In a possible design, before the transmitter is configured to send the discovery signal, the processor is configured to determine a format of the discovery signal in the M consecutive subframes based on the subframe number carried by the first Q subframes.

In a possible design, if the first carrier sense fails, the receiver is configured to perform second carrier sense for a subframe, other than the first R subframes, in a time sequence of one radio framethethe in the first DMTC window, alternatively, perform the second carrier sense for a subframe, other than the first R subframes, in the first DMTC window.

In a possible design, if the second carrier sense succeeds, the transmitter is configured to send the discovery signal in the subframe in the first DMTC window.

In a possible design, the first DMTC window includes the N subframes; and if N is less than or equal to 11-Q, a start subframe in the M consecutive subframes is located in the N subframes; or if N is greater than 11-Q, the start subframe in the M consecutive subframes is in first 11-Q subframes in the radio frame, where the subframe number is carried by the first Q subframes in the M consecutive subframes.

In a possible design, the first DMTC window includes one or more radio frames, or a part of one radio frame.

According to still yet another aspect, user equipment (UE) is provided. The UE includes a receiver and a transmitter, where the receiver is configured to detect a discovery signal in first R subframes of one radio frame in a first discovery signal measurement timing DMTC window, where the discovery signal is carried in M consecutive subframes, and M is greater than or equal to 2; a first subframe of the M consecutive subframes is located in the radio frame in the first DMTC window, and both M and R are natural numbers.

In a possible design, the first DMTC window includes N subframes; and if N is less than or equal to 11-M, R is less than or equal to N; or if N is greater than 11-M, R is less than or equal to 11-M.

In a possible design, the first DMTC window includes the N subframes; and a subframe number is carried by first Q subframes in the M consecutive subframes, where Q is less than or equal to M; and if N is less than or equal to 11-Q, R is less than or equal to N; or if N is greater than 11-Q, R is less than or equal to 11-Q.

In a possible design, the receiver is configured to receive the discovery signal. The UE further includes a processor, where before the transmitter is configured to send the discovery signal, the processor is configured to determine, based on subframe number of first Q subframes, a format of the discovery signal in the M consecutive subframes.

According to still yet another aspect, this embodiment of this application provides a computer storage medium, where when the program is executed by a processor, the method in any possible design of the foregoing base station and/or user equipment is implemented.

According to still yet another aspect, an embodiment of this application provides a computer program product, where when the computer program product is run on a computer, the computer is enabled to perform the method in any possible design of the foregoing base station and/or user equipment.

Embodiments of this application provide a method for sending a discovery signal, a method for detecting a discovery signal, a base station, and user equipment. The base station performs first carrier sense for first R subframes in a time sequence of one radio frame in a first discovery signal measurement timing DMTC window, and if the first carrier sense succeeds, sends the discovery signal in M consecutive subframes, where M is greater than or equal to 2, and a first subframe of the M consecutive subframes is located in the radio frame in the first DMTC window; and both M and R are natural numbers. In other words, in the embodiments of this application, the radio frame in the first DMTC window may be divided into two parts. The first carrier sense may be attempted to be performed starting from the first subframe, that is, a subframe 0. If the first carrier sense is successfully performed in a range of first R subframes, the discovery signal may be sent in a plurality of consecutive subframes. Compared with the prior art in which a discovery signal DRS occupies one subframe, in this application, enhanced discovery signal transmission is supported by using a new discovery signal measurement timing configuration, to implement accessing UE in a weak coverage scenario, thereby improving cell coverage performance.

### BRIEF DESCRIPTION OF DRAWINGS

FIG. 1 is a schematic diagram of a scenario in which an MF base station deployed based on an unlicensed (unlicensed) frequency channel number and wireless fidelity (Wireless-Fidelity, wifi) that are coexist according to an embodiment of this application;
FIG. 2 is a schematic diagram of signal fading caused by being blocked according to an embodiment of this application;
FIG. 3 is a schematic diagram of a configuration parameter of a DMTC window for sending a DRS according to an embodiment of this application;
FIG. 4 is a schematic diagram of a format of an eDRS according to an embodiment of this application;
FIG. 5 is a schematic diagram of a format of an eDRS according to an embodiment of this application;
FIG. 6 is a schematic diagram of a subframe occupied when an eDRS is sent in a DMTC window according to an embodiment of this application;
FIG. 7 is a schematic diagram of sending of an eDRS exceeding a subframe of a DMTC window according to an embodiment of this application;
FIG. 8 is a schematic flowchart of a DMTC configuration method according to an embodiment of this application;
FIG. 8a is a schematic diagram of three possible formats of an eDRS according to an embodiment of this application;
FIG. 9 is a schematic diagram of an attempt to perform Cat. 4 LBT and an attempt to perform Cat. 2 LBT in a DMTC window according to an embodiment of this application;
FIG. 10 is a schematic diagram of an attempt to perform Cat. 4 LBT and an attempt to perform Cat. 2 LBT when a DMTC window is added according to an embodiment of this application;
FIG. 11 is a schematic structural diagram of a base station according to an embodiment of this application; and
FIG. 12 is a schematic structural diagram of a base station according to an embodiment of this application.

### DESCRIPTION OF EMBODIMENTS

For ease of understanding, example descriptions of some concepts related to this application are provided for reference, as shown below:

Listen-before-talk (Listen-Before-Talk, LBT) is a sense before transmit manner, indicating that each network element needs to perform the LBT before sending data. To be specific, the network element can send the data only after detecting that a channel is idle, and can send only a maximum of data with finite duration after preempting the channel each time.

In an MF system, before sending data, a base station can sense a signal by using two categories of the LBT. For example, a random backoff-based channel clear assessment and a non-random backoff-based channel clear assessment, and specifically, Cat. 2 LBT and Cat. 4 LBT may be used as examples for description.

Cat. 2 LBT is a non-random backoff-based clear channel assessment (Clear Channel Assessment, CCA). For example, a channel is sensed at a sending node, and if it is detected that the channel is idle within 25 us, the sending node may immediately occupy the channel to send data.

Cat. 4 LBT is a random backoff-based CCA. Required listening duration needs to be randomized, and may specifically be: The sending node evenly and randomly generates a backoff counter N between 0 and a contention window length (Contention Window Size, CWS), and senses by using a listening slot (CCA slot) as a granularity. Within the listening timeslot, if it is detected that a channel is idle, the backoff counter is reduced by 1; or if it is detected that the channel is busy, the backoff counter is suspended, that is, the backoff counter N remains unchanged within a time during which the channel is busy, until it is detected that the channel is idle; and when the backoff counter is reduced to 0, the sending node may immediately occupy the channel.

Before the backoff counter, the base station at least needs to detect that the channel is idle within a time length of defer duration. A calculation formula of duration of the defer duration is (16+9^{∗}mp), and a value of mp may be shown in the following Table 1 based on a value of a priority class (priority class). Before sending the data, the base station initializes, based on the used priority class, a time needing an idle channel. Usually, a higher priority class indicates a shorter time that needing an idle channel, but also a shorter time that can be used to send data.

**Table 1**

| Channel access priority class (Channel Access Priority Class) (p) | mp | CWmin, p | CWmax, p | Tmcot, p | Allowed CWp sizes |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

CWmin, p indicates a minimum value of the contention window length, CWmax, p indicates a maximum value of the contention window length, and CWp indicates a value of the allowed contention window length. Tmcot, p indicates a maximum time within which data is allowed to be sent. For example, using priority class 1 as an example, a random number, for example, 0, is selected from 0 to 7, meaning that a time of sensing needed by base station is 25+25^{∗}0=25 us; or if the random number is 7, meaning that the time of sensing needed by the base station is 25+9^{∗}7=88 us. Therefore, for Cat. 4 LBT, a minimum time of sensing needed by the base station is 25 us.

There are two channel states: a channel is idle and the channel is busy. A criterion for determining the channel states is: A wireless communications device compares power received on the channel within the listening timeslot with an energy detection threshold. If the power is greater than the threshold, the channel state is that the channel is busy; or if the power is less than the threshold, the channel state is that the channel is idle.

A discovery signal measurement timing (Discovery Signal Measurement Timing, DMTC) is used to indicate an opportunity to send a discovery signal based on a configuration parameter, where the configuration parameter thereof may include a period (dmtc-Periodicity-mf) of the DMTC, a start location (dmtc-Offset-mf) of a subframe of a DMTC window (window) within the period, and a length (dmtc-WindowSize-mf) of the DMTC window.

A DRS is used for UE to implement a network access process by receiving a DRS of a base station device.

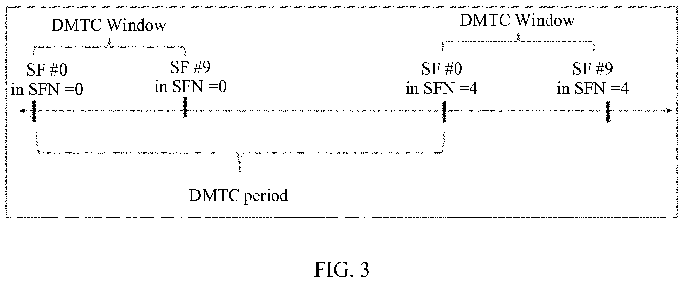

For a DRS sending opportunity, that is, a configuration parameter of the DMTC corresponding to the DRS, for example, if the dmtc-Periodicity-mf is configured as 40 ms, the dmtc-Offset-mf is configured as 0, and the dmtc-WindowSize-mf is configured as 10 ms, it indicates that the start location of the subframe of the DMTC window is a subframe 0, that is, the subframe 0 of a radio frame (radio frame), and each radio frame includes 10 subframes. The period of the DMTC is 40 ms, and the length of the DMTC window within the period is 10 ms, that is, the subframe 0 to a subframe 9, as shown in FIG. 3. In the DMTC window, the base station can perform, based on the configuration parameter of the DMTC, that is, the subframe 0 to the subframe 9, Cat. 2 LBT before starting the subframe 0 to perform channel sense. If sensing that the channel is always in an idle state within 25 us, the base station sends the DRS. If Cat. 2 LBT is unsuccessfully performed, that is, it is sensed that the channel is not in an idle state within 25 us all the time, before starting a next subframe 1, the base station may continue to perform Cat. 2 LBT at first 25 us to perform the channel sense, and if Cat. 2 LBT is successfully performed before a subframe, the base station sends the DRS in the subframe.

A network architecture and a service scenario that are described in this application are intended to describe technical solutions in this application more clearly, and do not constitute a limitation on the technical solutions provided in this application. A person of ordinary skill in the art may know that with evolution of the network architecture and emergence of a new service scenario, the technical solutions provided in this application are also applicable to the similar technical problems.

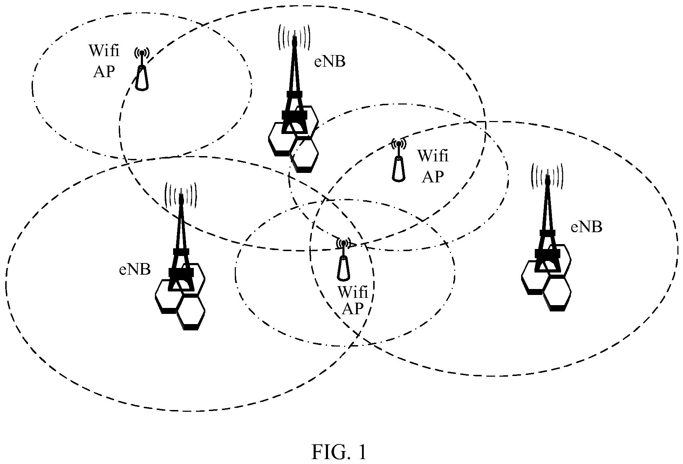

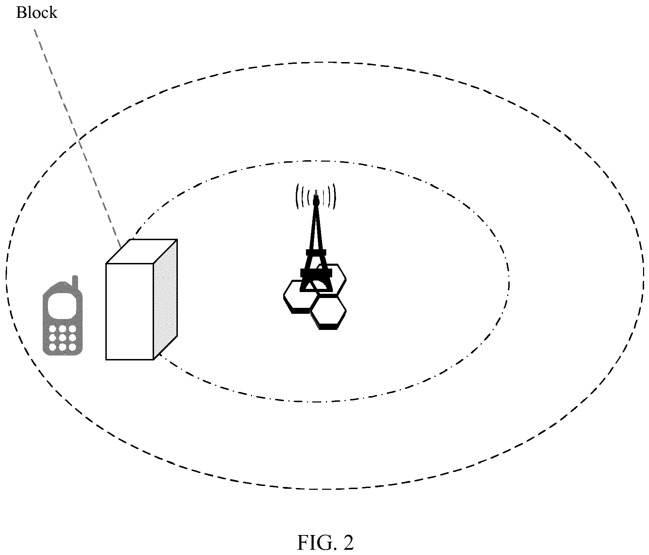

This application may be applied to enhancement of a discovery signal on an unlicensed (unlicensed) frequency channel number in a long term evolution (Long Term Evolution, LTE) broadband system or a MulteFire (MF) system. One of features of the unlicensed frequency channel number is to allow different units and individuals and systems of different standards to use a same frequency channel number. At present, the unlicensed frequency channel number is mainly used by a wifi system. One of scenarios in which an MF base station deployed based on the unlicensed frequency channel number and wifi that are coexist may be shown in FIG. 1. The MF system can be independently deployed on the unlicensed frequency channel number, and can be adapted to an intelligent operation such as an enterprise, a factory, a workshop, and a warehouse. However, in these independently deployed scenarios, there are some depth coverage requirements, for example, control of an automated guided vehicle (Automated Guided Vehicle, AGV) in a harbor. When a container blocks or a pillar blocks between vehicles, signal fading is severe, and in this case, coverage needs to be enhanced, as shown in FIG. 2.

The network architecture in this application may include a base station device and user equipment.

The base station (Base Station, BS) device may also be referred to as a base station, and is an apparatus deployed in a radio access network to provide a wireless communications function. For example, in a 2G network, a device providing a base station function includes a base transceiver station (Base Transceiver Station, BTS) and a base station controller (Base Station Controller, BSC); in a 3G network, a device providing a base station function includes a NodeB (NodeB) and a radio network controller (Radio Network Controller, RNC); in a 4G network, a device providing a base station function includes an evolved NodeB (evolved NodeB, base station); and in a wireless local area network (Wireless Local Area Networks, WLAN), a device providing a base station function is an access point (Access Point, AP). In a 5G communications system, a device providing a base station function includes a new radio NodeB (New Radio NodeB, gNB), a centralized unit (Centralized Unit, CU), a distributed unit (Distributed Unit), a new radio controller, and the like.

The user equipment UE is a terminal device, and may be a mobile terminal device or an immobile terminal device. The terminal device is mainly configured to receive or send service data. The user equipment may be distributed in a network. The user equipment has different names in different networks, for example, a terminal, a mobile station, a subscriber unit, a station, a cellular phone, a personal digital assistant, a wireless modem, a wireless communications device, a handheld device, a laptop computer, a cordless phone, and a wireless local loop station. The user equipment may communicate with one or more core networks by using a radio access network (radio access network, RAN for short) (an access part of a wireless communications network), for example, exchange voice and/or data with the radio access network.

When multi-user scheduling exists in a downlink, power is shared among a plurality of users, a downlink user cannot send data at full power, so that coverage enhancement design needs to be performed on the downlink channel in this scenario.

In this embodiment of this application, another discovery signal, that is, an enhanced discovery signal (Enhanced Discovery Signal, eDRS), may be defined. A core difference between the eDRS and the DRS is that a quantity of subframes occupied when the eDRS is sent is different from a quantity of subframes occupied when the DRS is sent. The DRS occupies one sub frame, while the eDRS may occupy a plurality of subframes, so that a probability that the downlink user receives the discovery signal is increased, thereby improving cell coverage performance. The base station in this embodiment of this application can send the eDRS, ensuring cell coverage performance.

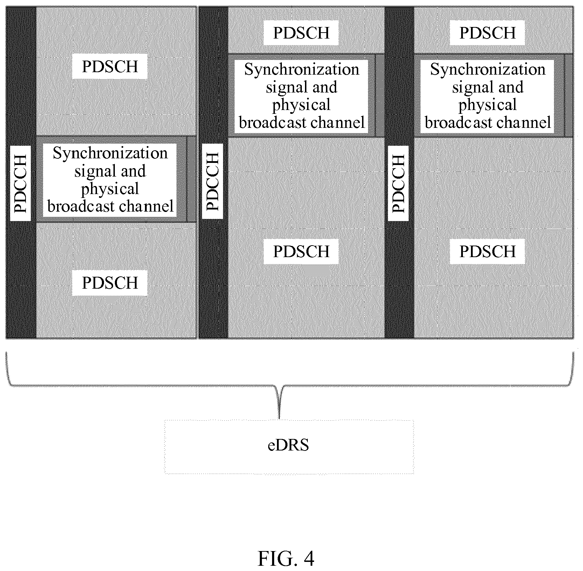

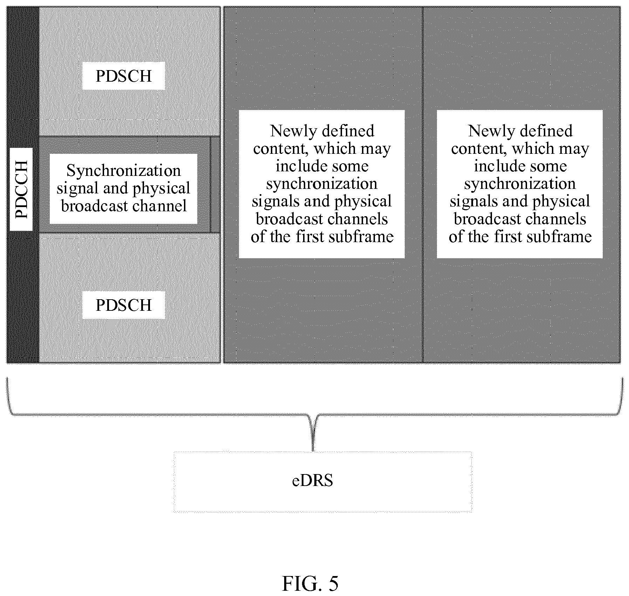

Different from the DRS, for the eDRS, the eDRS occupies a plurality of subframes in time domain. Two possible formats of the eDRS are described herein. A first possible format is: The eDRS occupies a subframes, and a first subframe includes or is compatible with an existing DRS. Remaining subframes other than the first subframe also include a DRS. However, a synchronization signal and a broadcast channel of the DRS included in the first subframe and other subframes are different (or may be partially the same), and a time domain resource position, a signal format, and a channel format are the same. The eDRS occupying three subframes is used as an example, the format of the eDRS may be shown in FIG. 4. A second possible format is: The eDRS occupies a subframes. Except that the first subframe includes or is compatible with the existing DRS, the remaining subframes are newly defined DRSs, and do not include the existing DRS, but the remaining subframes may include partial content of the existing DRS, for example, include a part of the synchronization signal and the broadcast channel. The eDRS occupying three subframes is used as an example, the format of the eDRS may be shown in FIG. 5.

In the first possible format, the eDRS occupies the plurality of subframes in the time domain, and five subframes are used as an example. The first subframe of the eDRS includes the DRS and is used for compatibility with an existing terminal device, denoted as 1.0 DRS, where 1.0 is an MF standard version number. A case of subsequent four subframes, for example, may be: a second subframe to a fourth subframe are newly defined DRSs of the eDRS, denoted as 1.1 DRS, and a fifth subframe is 1.0 DRS; or the second subframe, the third subframe, and the fifth subframe are 1.1 DRSs, and the fourth subframe is 1.0 DRS.

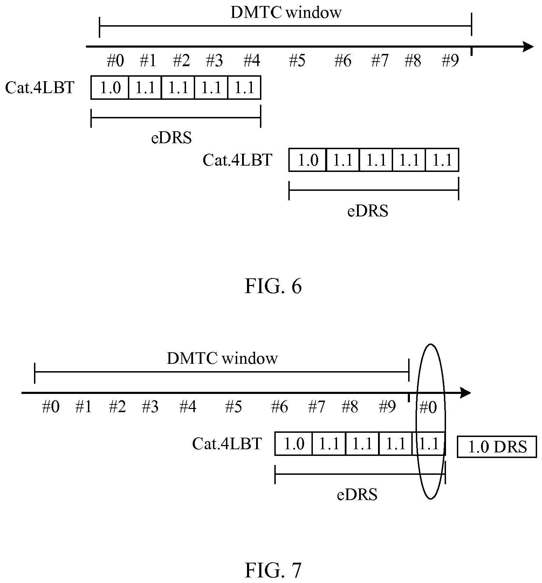

In the second possible format, the eDRS occupies the plurality of subframes in the time domain, and five subframes are used as an example, as shown in FIG. 6. The first subframe of the eDRS includes the DRS, that is, a 1.0 DRS, and four subsequent subframes are newly defined DRSs of the eDRS, denoted as 1.1 DRS, and are used by a 1.1 MF terminal to receive the eDRS. Because the eDRS includes the plurality of subframes, the base station cannot perform Cat. 2 LBT used for channel sense when the DRS is sent, and may perform first carrier sense, where the first carrier sense may be Cat. 4 LBT. A time in which the channel is idle when Cat. 4 LBT is successfully performed is not shorter than a time in which the channel is idle when Cat. 2 LBT is successfully performed. For example, in existing DMTC configuration, the base station performs Cat. 4 LBT before a first subframe 0, that is, a start location, in the DMTC window. If Cat. 4LBT is successfully performed, the eDRS is sent starting from the subframe 0 to a subframe 4. If Cat. 4 LBT is not successfully performed, Cat. 4 LBT is performed continuously before a next subframe until Cat. 4 LBT is successfully performed, to send the eDRS. If Cat. 4 LBT is unsuccessfully performed by the base station from the subframe 0 to a subframe 5, Cat. 4 LBT can be performed continuously only before a subframe 6. If Cat. 4 LBT is successfully performed before the subframe 6, the eDRS is delivered in the subframe 6. In this case, a last subframe occupied by the eDRS exceeds the DMTC window, and is 1.1 DRS, as shown in FIG. 7. However, an existing standard (MulteFire Release 1.0) specifies that if any subframe 0 outside the DMTC window is a downlink subframe, the eNB must send the existing DRS, that is, 1.0 DRS. In this case, the eDRS needs to define a plurality of formats based on a location of the start subframe. The UE needs to know a specific format of the received eDRS for demodulation. Otherwise, the UE needs to attempt to blindly detect the eDRS in each possible format, resulting in excessively high complexity.

This application provides a method for sending and detecting a discovery signal, to improve cell coverage performance.

Step 801. A base station performs first carrier sense for first R subframes in a time sequence of one radio frame in a first discovery signal measurement timing DMTC window; and selects to perform step 802 or step 803 based on a result of the first carrier sense.

In an optional design, the first carrier sense is used to determine whether the discovery signal can be sent in a plurality of consecutive subframes. Specifically, the first carrier sense may be first-level carrier sense. That sending the discovery signal in the plurality of consecutive subframes may be repeatedly sending a DRS in a plurality of subframes, alternatively, may be occupying the plurality of subframes to send an eDRS. For a structure of the eDRS, reference may be made to the two formats in the foregoing description.

In still another optional design, a configuration parameter of the first DMTC further includes a length N of the DMTC window (that is, a quantity of subframes included in one DMTC window), a period of the DMTC window, and a subframe start location of the DMTC window in the period.

The first DMTC window may include one or more radio frames, or a part of one radio frame.

For example, that the length of the first DMTC window is N may be one radio frame 10 ms, the period of the DMTC window may be 40 ms, and the subframe start location may be a subframe 0.

In still another optional design, that the base station performs the first carrier sense on the first R subframes in the time sequence of one radio frame in the first discovery signal measurement timing DMTC window specifically includes:

The base station first performs the first carrier sense on a first subframe of one radio frame in the first DMTC window. If the first carrier sense fails, the base station continuously performs the first carrier sense on a next subframe in the time sequence, or if the listening succeeds, the base station performs step 802; otherwise, continuously performs the first carrier sense on still another next subframe in the time sequence. That performing carrier sense in the first subframe may be understood as that performing the first carrier sense before the first subframe, to determine whether a channel is idle.

Based on the foregoing procedure, the first DMTC configured in this application may support sending the eDRS in one DMTC window, and the first R subframes in the time sequence of one radio frame in the first DMTC window may be used as the subframe start location of the eDRS. Optionally, a subframe, other than the first R subframes, in the time sequence of one radio frame in the first DMTC window may be used as the subframe start location of the DRS, or a subframe, other than the first R subframes, in the first DMTC window may be used by the base station as the subframe start location of the DRS. In this way, an eNB can obtain an eDRS sending opportunity and a DRS sending opportunity in one radio frame in the first DMTC window.

Step 802. If the first carrier sense succeeds, the base station sends the discovery signal in M consecutive subframes, where M is greater than or equal to 2.

That the first carrier sense succeeds indicates that the base station determines that first channel is idle, and can be configured to send the discovery signal. For example, it may be understood that the base station successfully performs the first carrier sense before the first subframe, determining that the channel is idle. For example, the first DMTC window includes 10 subframes. If the base station successfully performs the first carrier sense in a second subframe, that is, a subframe 1, within a range of first six subframes, the base station determines that the channel is idle in this case, and may be used to send the discovery signal.

The M consecutive subframes may be subframes in which a plurality of DRSs are repeatedly sent, alternatively, may be subframes occupying the M consecutive subframes for sending the eDRS.

In an optional design, when the base station successfully performs the first carrier sense in a subframe of the first R subframes in the time sequence of one radio frame in the first discovery signal measurement timing DMTC window, the base station sends the discovery signal in the M consecutive subframes starting from the subframe. In this implementation, the discovery signal is enabled to be carried in a plurality of subframes, so that enhanced discovery signal transmission is supported, to implement accessing in a weak coverage scenario, thereby ensuring the cell coverage performance.

In another optional design, a value of M may be a preset value, for example, specified in a standard or a protocol, alternatively, may be dynamically or semi-statically configured by the base station. The base station may dynamically configure a quantity M of subframes occupied by the discovery signal, alternatively, may semi-statically configure in a period or in another manner.

Further, optionally, the discovery signal carried in the M consecutive subframes may specifically be: A plurality of DRSs are repeatedly sent in the M consecutive subframes, alternatively, the eDRS is sent in the M consecutive subframes.

Further, optionally, a first subframe of the M consecutive subframes is compatible with or includes the discovery signal in the prior art.

Further, optionally, the value of M is 5.

Specifically, when the first carrier sense is Cat. 4 LBT, if the base station successfully performs Cat. 4 LBT, the base station determines that the first carrier sense is successfully performed on an (L)th subframe in the first DMTC window, where the (L)th subframe is located in the first R subframes in the time sequence of one radio frame in the first DMTC window, and the base station starts to send, in the (L)th subframe, the discovery signal occupying the M consecutive subframes.

In still another optional design, if the first carrier sense of a subframe in the first R subframes succeeds, the base station determines that a quantity of subframes after the subframe located in the time sequence in the first discovery signal measurement timing DMTC window is greater than or equal to M, where M is a quantity of subframes occupied by the enhanced discovery signal eDRS, and M is greater than 1. Therefore, the base station sends the eDRS.

In a possible design, a maximum quantity of the subframes of the DMTC window in the existing standard (MulteFire Release 1.0) is 10, and the subframes include a subframe 0 to a subframe 9, being one radio frame. The quantity M of the subframes occupied by the eDRS configured in this application is two or more, and may be a fixed format, for example, a first subframe is 1. 0 DRS, and remaining subframes are 1.1 DRS. The first DMTC window configured in this application may include N subframes, and if N is less than or equal to 11-M, R is less than or equal to N; or if N is greater than 11-M, R is less than or equal to 11-M. To be specific, in the first DMTC window, a subframe location in which the first carrier sense is performed to send the eDRS is determined based on the length N of the first DMTC window and the quantity M of the subframes occupied by the eDRS. Because of the foregoing two cases, a maximum value of R is 11-M, ensuring that the subframe occupied by the eDRS does not occupy the subframe 0 outside an existing DMTC window even if the subframe belongs to a plurality of radio frames, and a subframe format of the eDRS does not conflict with the subframe 0 that must be 1.0 DRS and that is outside a window stipulated in the prior art.

For a case in which N is less than or equal to 11-M, and R is less than or equal to N, any subframe in all subframes in the first DMTC window may be used to perform the first carrier sense, to be used as a start subframe for sending the eDRS when the first carrier sense is successfully performed.

For example, a minimum value of the quantity M of the subframes occupied by the eDRS is 2, and N is equal to 9. That is, the first DMTC window includes a subframe 0 to a subframe 8, and in this case, R is equal to 9. In other words, if the base station successfully performs the first carrier sense for the subframe 8, the subframe occupied by the eDRS is the subframe 8 in the first DMTC window and a subframe 9 outside the first DMTC window based on a subframe number sequence. It may be ensured that the subframe occupied by the eDRS in this application does not conflict with the first subframe 0 that must be 1.0 DRS and that is outside the window when the length of the existing DMTC window is 10 even if the subframe exceeds the window.

For another example, the quantity M of the subframes occupied by the eDRS is 5, N is less than or equal to 6, and R is less than or equal to 6. When the length of the first DMTC window is 6, and the subframes include a subframe 0 to a subframe 5, the first carrier sense is successfully performed even if in a sixth subframe, that is, the subframe 5. In this case, the subframe occupied by the eDRS includes the subframe 5 in the first DMTC window and a subframe 6 to a subframe 9 outside the first DMTC window, and do not conflict with the first subframe 0 that must be 1.0 DRS and that is outside the existing DMTC window when the length of the DMTC window is 10.

For a case in which N is greater than 11-M, and R is less than or equal to 11-M, that M is 2 is still used as an example. When N is equal to 10, a maximum value of R is 9, to be specific, if the first carrier sense is successfully performed in the subframe 8, the subframe occupied by the eDRS is the subframe 8 and the subframe 9 in the first DMTC window based on the subframe number sequence. It may be ensured that no subframe occupied by the eDRS in this application outside the first DMTC window and conflicts with the first subframe 0 that must be 1.0 DRS and that is outside the existing DMTC window when the length of the first DMTC window is 10.

For still another example, the eDRS occupies five subframes, and the length N of the first DMTC window is 10. In this case, R is 6, to be specific, the first DMTC window includes subframe 0 to subframe 9, and a start subframe of the five subframes occupied by the eDRS may be any subframe of the subframe 0 to the subframe 5, for example, the first carrier sense is successfully performed in the subframe 5, the five subframes occupied by the eDRS include the subframe 5 to the subframe 9, and the subframe occupied by the eDRS does not exceed the first DMTC window.

This application further provides a method for determining, based on the length N of the first DMTC window and a quantity Q of subframes carrying a subframe number when the eDRS is sent, first R subframe locations of one radio frame that can be used to perform the first carrier sense, that is, a range of a start subframe of a subframe occupied by the eDRS. Q is less than or equal to a quantity M of subframes occupied by the eDRS.

In a possible design, if N is less than or equal to 11-Q, R is less than or equal to N; or if N is greater than 11-Q, R is less than or equal to 11-Q. In this case, because a value of Q is less than M, and 11-Q is less than 11-M, when R is less than or equal to 11-Q, the subframe occupied by the eDRS may belong to a plurality of radio frames, that is, a subframe 0 outside an existing DMTC window may be occupied.

Therefore, in this application, a sending format of the eDRS may be determined based on the quantity M of the subframes occupied by the eDRS and the value of Q of first Q subframes carrying the subframe number. In this way, even if the subframe occupied by the eDRS includes the subframe 0 outside the existing DMTC window, UE can also demodulate the subframe number of the first Q subframes based on the first Q subframes, thereby determining the sending format of the eDRS and avoiding the foregoing conflict.

In a possible design, it is assumed that M subframes are occupied when the eDRS is sent, where the subframe number is carried by the first Q subframes: 1) If a subframe number of a start subframe occupied when the eDRS is sent is greater than or equal to 0, and is less than or equal to 10-M, a subframe format of last M-Q subframes occupied by the eDRS may not be 1.0 DRS, that is, the subframe format of the last M-Q subframes may all be 1.1 DRS. Because the subframe occupied by the eDRS does not include the subframe 0 outside the existing DMTC window, that is, does not conflict with the subframe 0 outside the DMTC window stipulated in an existing standard when the subframe 0 is 1.0 DRS. 2) If the subframe number of the start subframe occupied when the eDRS is sent is greater than 10-M, and is less than or equal to 10-Q, the format of the subframe 0 in the last M-Q subframes occupied by the eDRS may be 1.0 DRS. Because if the subframe number of the start subframe occupied by the eDRS is greater than 10-M, and is less than or equal to 10-Q, the last M-Q subframes occupied by the eDRS include the subframe 0 outside the existing DMTC window. To avoid a conflict, the format of the subframe 0 in the last M-Q subframes occupied by the eDRS may be set to 1.0 DRS.

For a case in which N is less than or equal to 11-Q, and R is less than or equal to N, to be specific, any subframe in the first DMTC window may be used to perform the first carrier sense; and at most N subframes may be used to perform the first carrier sense, and a subframe, when the first carrier sense is successfully performed, is used as the start subframe for sending the eDRS. For example, Q=3, that is, a subframe number is carried by first three subframes of the eDRS, N is 8, and R is also 8. In this case, subframes in the first DMTC window include a subframe 0 to a subframe 7, and a maximum subframe number of the start subframe occupied by the eDRS may be 7, to be specific, all subframes in the first DMTC window can be used for performing the first carrier sense.

For a case in which N is greater than 11-Q, and R is less than or equal to 11-Q, to be specific, if the length N of the first DMTC window is greater than 11-Q, the base station may perform the first carrier sense in total 11-Q subframes from a subframe 0 to a subframe 10-Q of one radio frame in the first DMTC window. For example, when Q is 3 and N is 10, subframes in which the base station may perform the first carrier sense are a subframe 0 to a subframe7 in the first DMTC window.

It can be seen that, according to a case in which the length of the DMTC window is less than or equal to 10 and that is stipulated in the existing standard, regardless of a value of the length N of the first DMTC window, the base station, in the first DMTC window, all has at most 11-Q subframes that can perform the first carrier sense.

For example, it is assumed that a value of Q is 3, the quantity M of the subframes occupied by the eDRS is 5, and the length N of the first DMTC window is 10, the base station may perform the first carrier sense in at most eight subframes in the first DMTC window, and the subframes include a subframe 0 to a subframe 7.

When N is less than or equal to 8, for example, N is 6, if the subframe number, when the first carrier sense is successfully performed, is greater than or equal to 0, and is less than or equal to 5, a maximum range of the subframe number of the subframes occupied by the eDRS are a subframe 5 to a subframe 9, and the subframes include the subframe 5 to a subframe 7 in the first DMTC window and a subframe 8 and the subframe 9 outside the first DMTC window.

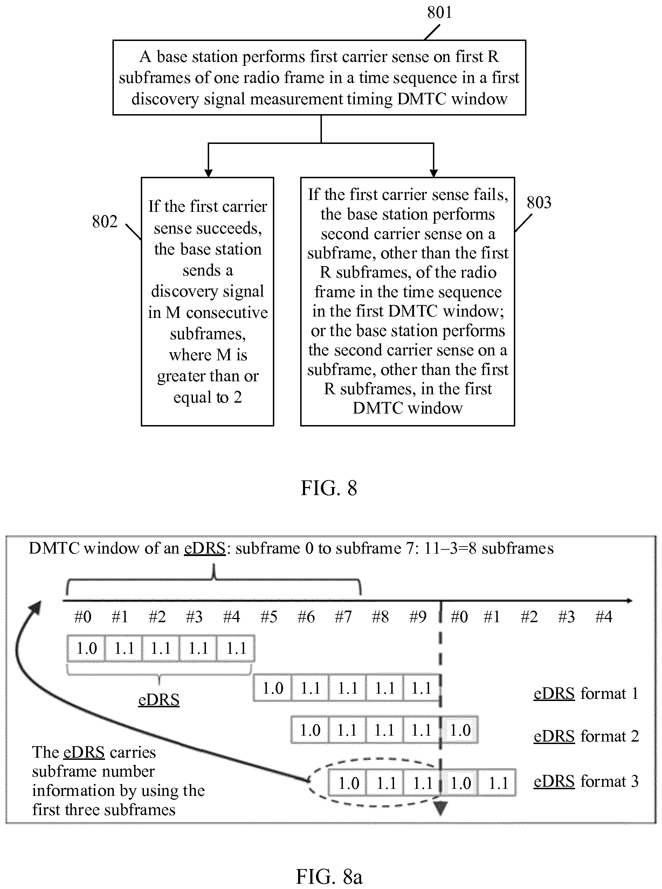

According to the foregoing two formats of the eRDS, when the subframes occupied by the eDRS are a subframe 5 to a subframe 9, the subframe 0 outside the existing DMTC window is not occupied, and last M-Q subframes are occupied by the eDRS, to be specific, a subframe format of last two subframes may not be 1.0 DRS, that is, the subframe format of the last two subframes may both be 1.1 DRS, and are different from the format of 1.0 DRS. In this case, the format of the eDRS may be eDRS format 1 shown in FIG. 8a, to be specific, a first subframe of the eDRS is 1.0 DRS, and is used to be compatible with an existing standard format; and a format of other four subframes may all be 1.1 DRS.

If the subframe number, when the first carrier sense is successfully performed, is greater than 5, and less than or equal to 7, to be specific, the subframe number of the start subframe occupied when the eDRS is sent may be 6 or 7, regardless of whether the length N of the first DMTC window is less than or equal to 8, or greater than 8, a fifth subframe or a fourth subframe of the five subframes occupied by the eDRS occupies the subframe 0 outside the existing DMTC window. To avoid the foregoing conflict, a format of the subframe 0 in the last two subframes occupied by the eDRS may be set to 1.0 DRS. As shown in FIG. 8a, for example, if the subframe number of the start subframe occupied when the eDRS is sent is 6, a format of a subframe 6 may be set to 1.0 DRS, a format of a subframe 7 to a subframe 9 may be set to 1.1 DRS, and a format of the subframe 0 outside the existing DMTC window may be set to 1.0 DRS, for example, an eDRS format 2 in FIG. 8a. If the subframe number of the start subframe occupied when the eDRS is sent is 7, the format of the subframe 7 is set to 1.0 DRS, the format of the subframe 8 and the subframe 9 is set to 1.1 DRS, the format of the subframe 0 outside the DMTC window is set to 1.0 DRS, and a subframe 1 is 1.1 DRS, for example, an eDRS format 3 in FIG. 8a.

For the UE, the UE learns of the quantity M of the subframes occupied by the eDRS in advance. When the subframe number is carried by the first Q subframes in which the eDRS is sent, the UE can deduce the subframe number occupied by the last M-Q subframes, thereby determining the subframe format of the eDRS.

Step 803. If the first carrier sense fails, the base station performs second carrier sense for a subframe, other than the first R subframes, in the time sequence of the radio frame in the first DMTC window; or optionally, the base station performs the second carrier sense for a subframe, other than the first R subframes, in the first DMTC window.

For example, the length of the first DMTC window is N, and the base station performs the second carrier sense for the subframe, other than the first R subframes, in the time sequence of the radio frame in the first DMTC window. In other words, if the second carrier sense performed on the subframe, other than the first R subframes, in the time sequence in the first DMTC window succeeds, the base station sends a discovery signal in the subframe in the first DMTC window, where the discovery signal occupies only one subframe, and may be a discovery signal in the prior art or a new discovery signal. This is not specifically limited herein.

If the second carrier sense performed for the subframe, other than the first R subframes, in the time sequence in the first DMTC window fails, the base station cannot obtain a sending opportunity in the first DMTC window, and does not send the discovery signal.

That the second carrier sense succeeds indicates that the base station determines that the first channel is idle, and can be configured to send the discovery signal.

If the first DMTC window includes a plurality of radio frames, and if the first carrier sense fails, the base station may perform the second carrier sense for the subframe, other than the first R subframes, of one radio frame in the first DMTC window.

In an optional design, the second carrier sense is used to determine whether the discovery signal can be sent in one subframe. Specifically, the second carrier sense may be second-level carrier sense, for example, may be foregoing Cat. 2 LBT. Cat. 2 LBT is used to determine whether the DRS can be sent in one subframe.

In another optional design, that the base station performs the second carrier sense for the subframe, other than first R subframes, in the time sequence of the radio frame in the first DMTC window specifically includes:

The base station first performs the second carrier sense for a first subframe of the subframe, other than the first R subframes, in the time sequence of the radio frame in the first DMTC window. If the second carrier sense fails, the base station continues to perform the second carrier sense for a next subframe of the subframe, other than the first R subframes, in the time sequence, or if the sense succeeds, a discovery signal is sent in the subframe in which the sense succeeds; otherwise, the base station continues to perform the second carrier sense for still another next subframe in the time sequence.

It should be noted herein that the first carrier sense and the second carrier sense in this embodiment of this application are not limited to the foregoing description. The first carrier sense and the second carrier sense may be different in one or more aspects of sensing duration, a sensing manner, occupation duration, and the like. The foregoing levels may also be distinguished based on different existing sensing manners, for example, a backoff-based sensing manner and a non-backoff-based sensing manner. Specifically, Cat. 4 LBT and Cat. 2 LBT belong to different sensing levels, and may be further defined based on a difference of one or more values of the sensing duration, the sensing manner, the occupation duration, and the like. This is not specifically limited herein. For example, the first carrier sense may be a backoff-based CCA, for example, the foregoing recorded Cat. 4 LBT, so that when the first carrier sense is successfully performed, a discovery signal that occupies a plurality of consecutive subframes is sent. The second carrier sense may be a non-backoff-based CCA, for example, the foregoing recorded Cat. 2 LBT, and may be used to: when the sense is successfully performed, send a discovery signal that occupies only one subframe.

It should be further noted herein that, in this embodiment of this application, carrier sense (the first or the second carrier sense) is performed on one subframe, means that within a period of time before the subframe (that is, within a period of time in last subframe before the subframe in time), the base station performs the first carrier sense or the second carrier sense. When a corresponding carrier sense condition is met, the sense succeeds, and in this case, it is determined that the channel is idle, and the subframe may be used to send a signal.

It should be noted herein that any subframe in the first DMCT window may be used to carry a discovery signal that occupies only one subframe.

It may be understood that the eNB may determine, based on the length N of the first DMTC window and the quantity M of the subframes occupied by the eDRS, that the eNB may attempt to perform Cat. 4 LBT in the radio frame in the first DMTC window to send the first R subframes of the eDRS, alternatively, determine, based on the length N of the first DMTC window and the quantity Q of the subframes carrying the subframe number when the eDRS is sent, that the eNB may attempt to perform Cat. 4 LBT in the radio frame in the first DMTC window to send the first R subframes of the eDRS. If the eNB determines that there is a relatively small quantity of UEs in a weak coverage scenario, there is no need to perform Cat. 4 LBT a plurality of attempts in the first DMTC window for sending the eDRS. In a possible design, if the Cat. 4 LBT is unsuccessfully performed all the time starting from the start location of the first DMTC, the eNB may stop performing Cat. 4 LBT in any subframe of the first R subframes in one radio frame in the first DMTC window, and attempt to perform Cat. 2 LBT on remaining subframes in the radio frame in the first DMTC window. In another possible design, the eNB may alternatively attempt to perform Cat. 2 LBT starting from the first subframe of the first R subframes in the radio frame in the first DMTC window, and then send the DRS in a current subframe after Cat. 2 LBT is successfully performed. If, in this case, the DRS does not exceed the range of the first R subframes in the radio frame in the first DMTC window, the eNB may continue to attempt to perform Cat. 4 LBT to start to send the eDRS in a subframe in which Cat. 4 LBT is successfully performed. In still another optional design, user equipment (UE) detects a discovery signal in the first R subframes in the time sequence of the radio frame in the first DMTC window, where the discovery signal is carried in the M consecutive subframes, and M is greater than or equal to 2.

Optionally, the UE considers (consider) that a first subframe of the M consecutive subframes are located in the radio frame in the first DMTC window, and therefore, the UE detects the discovery signal in the first R subframes in the radio frame. If the discovery signal is detected, the UE receives the discovery signal in the M consecutive subframes.

Further, optionally, when the subframe number is carried by the first Q subframes of the M subframes occupied by the eDRS, the UE may determine, based on the subframe number of the first Q subframes, the subframe format of the eDRS.

Further, optionally, if the UE does not detect the discovery signal in the first R subframes, the UE continues to detect a discovery signal in a subframe, other than the first R subframes, in the time sequence in the radio frame in the first DMTC window, and if the UE can detect the discovery signal, the discovery signal occupies only one subframe.

In still another optional design, R is less than or equal to N-M+1.

Optionally, a value of R is equal to N-M+1.

If the base station always performs the first carrier sense in the first R subframes until the first carrier sense for a (R)th subframe succeeds, the base station sends a discovery signal in M subframes starting from the (R)th subframe, and implements sending of the discovery signal exactly in the first DMTC window.

Optionally, the value of R is less than N-M+1.

If the base station always performs the first carrier sense in the first R subframes until the first carrier sense for the (R)th subframe succeeds, the base station sends the discovery signal in the M subframes starting from the (R)th subframe, where a length of the discovery signal does not exceed the length of the first DMCT window.

For example, in one DMTC window, the base station performs the first carrier sense on the first R subframes in the time sequence, and if the first carrier sense for the (R)th subframe is successfully performed, the base station starts to send a discovery signal from the (R)th subframe, where the discovery signal is carried in the M continuous subframes. The first carrier sense herein may be the backoff-based CCA, for example, Cat. 4 LBT described in the foregoing description. In other words, in this embodiment of this application, the first DMTC window may be divided into two parts. The first part is the first R subframes in the time sequence, and the second part is a subframe, other than the first R subframes, in the time sequence, so that the base station performs the first carrier sense for the first part, to send the discovery signal that occupies the M consecutive subframes after the first carrier sense succeeds, and improve and ensure cell coverage performance in a weak coverage scenario of the UE. For the discovery signal, the start subframe thereof is in the first R subframes of the first part, so that sending of the M consecutive subframes does not exceed the first DMTC window.

For another example, the length of the DMTC window is N=10 ms, that is, 10 subframes are included, and the period of the DMTC window may be 40 ms. If the discovery signal is sent in M=6 consecutive subframes, the base station performs the first carrier sense, for example, Cat. 4 LBT, for first five subframes in the DMTC window. In this case, the sense succeeds even in the fifth subframe in the time sequence, and sending of the discovery signal carried in six consecutive subframes does not exceed the length of the DMTC window; and optionally, if the first carrier sense is unsuccessfully performed in the first five subframes, the base station performs the second carrier sense, for example, Cat. 2 LBT, for last five subframes in the window, because the last five subframes are insufficient to send the discovery signal sent in the six consecutive subframes. If the second carrier sense succeeds, the base station sends a reference signal that occupies one subframe. For another example, the period of the DMTC window may be 40 ms. When a next DMTC window is reached, the base station may further perform, for a subframe in the next window, corresponding carrier sense recorded in the foregoing process.

For still another example, the length N of the DMTC window is 10 ms, the quantity of the subframes occupied by the eDRS is 5, and the eNB determines that there is a relatively small quantity of UE in a weak coverage scenario. If the eNB fails to perform Cat. 4 LBT before the subframe 0, and the eNB determines that an identifier 1 of a next subframe 1 is less than 5, the eNB continues to perform Cat. 4 LBT before the next subframe 1. Similarly, if it is still failed to perform Cat. 4 LBT on a subframe 2 and a subframe 3, the eNB determines to perform Cat. 2 LBT before a next subframe 4, and there is no need to perform Cat. 4 LBT for more times. It should be noted herein that the eNB may determine, based on an actual communications scenario and an actual communications status, when current-level carrier sense can be terminated, and use another-level carrier sense.

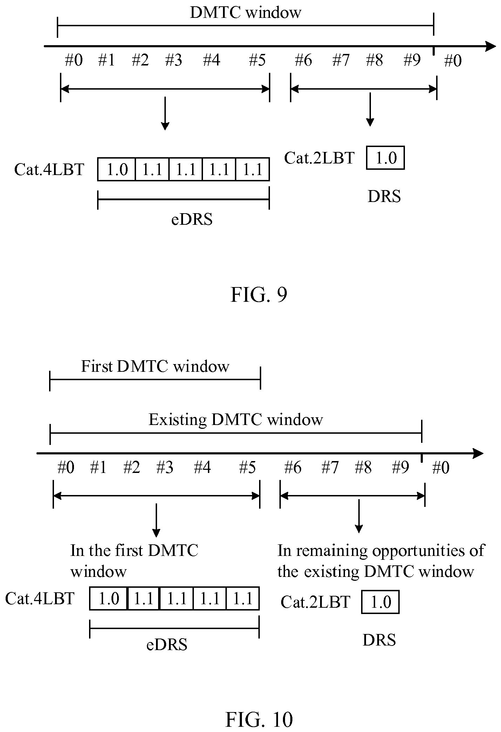

As shown in FIG. 9, for example, the length N of the DMTC window is 10 ms, and the quantity of the subframes occupied by the eDRS is 5. If the eNB fails to perform Cat. 4 LBT before the subframe 0, and the eNB determines that an identifier 1 of a next subframe 1 is less than 5, the eNB continues to perform Cat. 4 LBT before the next subframe 1. Similarly, if it is failed to perform Cat. 4 LBT after the subframe 2 and the subframe 3 until the subframe 4, the eNB determines that an identifier 5 of a next subframe 5 is equal to a value 5 of N-M, and in this case, the eNB still performs Cat. 4 LBT before the subframe 5. If Cat. 4 LBT is successfully performed before the subframe 5, in this case, the eNB may send the eDRS starting from the subframe 5, and sending of the eDRS occupies the subframe 5 to a subframe 9 at this time. If Cat. 4 LBT is unsuccessfully performed before the subframe 5, the eNB determines that a value 6 corresponding to a next subframe R+1 is greater than the value 5 of N-M, and in this case, the eNB performs Cat. 2 LBT before the next subframe 6. If Cat. 2 LBT is successfully performed before the subframe 6, the eNB sends the DRS in the subframe 6, or if it is failed to perform Cat. 2 LBT before the subframe 6, the eNB continues to perform Cat. 2 LBT before a subframe 7.

Enhanced discovery signal transmission is supported by using a new discovery signal measurement timing configuration, to implement accessing the UE in the weak coverage scenario, thereby ensuring the cell coverage performance. It is assumed that the signal format of the eDRS is a standard format. For example, the first subframe of the eDRS mentioned in the foregoing description is 1.0 DRS, and the other subframes are 1.1 DRS. In this case, it can be ensured that a subframe occupied for sending the eDRS is in the radio frame, and no subframe 0 outside the DMTC window as specified in the existing standard is encountered. Because in the existing standard, when the subframe 0 outside the DMTC window is a downlink subframe, the subframe 0 must be 1.0 DRS, conflicting with the eDRS. According to another aspect, to not conflict with the existing standard, a plurality of formats may be defined for the eDRS based on the quantity of the subframes occupied by the eDRS and the quantity of the subframes carrying the subframe number, so that the UE can determine, based on the subframe number, a format of the eDRS sent by the eNB, and the UE can detect the eDRS based on the determined format. To be specific, if the first DMTC window configured in this application can enable the sending of the eDRS in one radio frame in the DMTC window, the signal format of the eDRS may be a standard format, and the UE may receive the eDRS based on the standard format of the eDRS. If the subframe occupied for sending the eDRS belongs to a plurality of radio frames in the DMTC window, the subframe format of the eDRS may be set, to reduce complexity of implementing the eNB and the UE.

In another possible design, a start location of the first DMTC window configured in this application and a start location of an existing DMTC window may be the same, both starting from the subframe 0. The first DMTC window configured in this application is used to determine whether to perform the first carrier sense. In this embodiment of this application, a range of a quantity R of subframes in one radio frame that can be used to perform the first carrier sense may be determined based on the length N of the first DMTC window and the quantity M of the subframes occupied by the eDRS that are configured in this application.

If the quantity of the subframes occupied by the eDRS is M, the length of the first DMTC window configured in this application may be less than or equal to 11-M, alternatively, may be greater than 11-M, and a maximum value of R may be 11-M, so that a subframe occupied when the eDRS is sent is in one radio frame. If a subframe number is carried by first Q subframes of the subframe occupied by the eDRS, the maximum value of R may be 11-Q, so that even if the subframe occupied by the eDRS belongs to a plurality of radio frames, the UE may also determine the sending format of the eDRS based on the subframe number carried by the first Q subframes.

In this way, a configuration parameter of the first DMTC window configured in this application may be configured as follows: A parameter dmtc-Periodicity-mf indicating the period of the first DMTC window may be, for example, 40 ms, 80 ms, or 160 ms; a parameter dmtc-Offset-mf indicating the start subframe of the first DMTC window may be selected based on the period, for example, when the parameter of the period is 160 ms, a location of the start subframe may be any location in a subframe 0 to a subframe 159; and a parameter dmtc-WindowSize-mf indicating the length of the first DMTC window within the period may be any value from 1 to 11-M, or if the subframe number is carried by the first Q subframes in the M consecutive subframes, the parameter dmtc-WindowSize-mf indicating the length of the first DMTC window may be any value from 1 to 11-Q.

In other words, the length of the first DMTC window may be greater than or equal to 1, and less than or equal to 11-M; or the length of the first DMTC window may be greater than or equal to 1, and less than or equal to 11-Q, as long as Cat. 4 LBT is successfully performed in the first DMTC window. In this case, the eDRS may be sent starting from the subframe in which Cat. 4 LBT is successfully performed. In this case, that the eNB performs the first carrier sense in step 801 may be understood as that the eNB performs the first carrier sense in the radio frame of the first DMTC window, or the eNB performs the first carrier sense before the first DMTC window, to determine whether the first subframe of the first DMTC window is available. That the eNB performs the first carrier sense in step 801 may be that the eNB performs Cat. 4 LBT before a subframe in one radio frame in the first DMTC window. For example, Cat. 4 LBT is performed before a subframe 0. If Cat. 4 LBT is successfully performed before the subframe 0, the eNB occupies the subframe 0 to a subframe 4 to send the eDRS starting from the subframe 0, or if Cat. 4 LBT is unsuccessfully performed before the subframe 0 in the first DMTC window, the eNB continues to perform Cat. 4 LBT before a next subframe. Once Cat.4 LBT is unsuccessfully performed before a subframe R, for example, Cat. 4 LBT is unsuccessfully performed in a subframe 5 in the first DMTC window, the eNB is in a subframe 6. That is, Cat. 2 LBT is attempted to be performed before the subframe 6 of the DMTC window configured in the prior art, and if Cat. 2 LBT is successfully performed before the subframe 6, the DRS is sent in the subframe 6. In other words, the length of the first DMTC window is 6, that is, from a subframe 0 to a subframe 5, and a start subframe is 0. As shown in FIG. 10, the eNB can perform Cat. 4 LBT in the first DMTC window to attempt to send the eDRS. If Cat. 4 LBT is unsuccessfully performed, Cat.2 LBT can be performed in remaining opportunities of the existing DMTC window to attempt to send the DRS.

In still another optional design, the length of the first DMTC window may also exceed 11-Q, that is, a value N of N subframes included in the first DMTC window may also be greater than 11-Q. However, an allowed opportunity of sending the eDRS is first 11-Q subframes in the time sequence of the radio frame in the first DMTC window, that is, a start subframe in the M consecutive subframes is in the first 11-Q subframes in the radio frame. For example, the first DMTC may be configured as follows: The parameter dmtc-Periodicity-mf indicating the period of the first DMTC window may be, for example, 40 ms, 80 ms, or 160 ms; the parameter dmtc-Offset-mf indicating the start subframe of the first DMTC window may be selected based on the period, for example, when the parameter of the period is 160 ms, the location of the start subframe may be any location in the subframe 0 to the subframe 159; and the parameter dmtc-WindowSize-mf indicating the length of the first DMTC window within the period may be any value from 1 to 16, for example, the length of the first DMTC window is 16 ms, including 10 subframes of one complete radio frame within the period and a part of one next radio frame, that is, first six subframes in a time sequence of the next radio frame. If the quantity M of the subframes occupied by the eDRS is 5, and the subframe number is carried by first three subframes, the base station can attempt to perform Cat. 4 LBT only in first 11-3 subframes of one radio frame, that is, a subframe 0 to a subframe 7. If Cat. 4 LBT is successfully performed in (R)th subframe from the subframe 0 to the subframe 7, the base station starts to send the eDRS in the corresponding (R)th subframe.

In this way, the first DMTC window configured in this application may support sending of the first carrier sense, that is, Cat. 4 LBT, in the first DMTC window. Optionally, if Cat. 4 LBT is all unsuccessfully performed in the first DMTC window, in this case, Cat. 2 LBT is attempted to be performed in remaining subframes, other than the first R subframes, in the time sequence of the radio frame in the first DMTC window, to facilitate sending of the DRS. In this way, in the configuration of the first DMTC window, the eNB may obtain an eDRS sending opportunity and a DRS sending opportunity, to ensure the cell coverage performance, and a subframe occupied when the eDRS is sent does not exceed one radio frame. Based on the foregoing description, the signal format of the eDRS may be the standard format, so that the UE can receive the eDRS based on the standard format of the eDRS, or even if the subframe occupied when the eDRS is sent belongs to a plurality of radio frames, the sending format of the eDRS may also be determined based on the subframe number of the first Q subframes occupied by the eDRS, so that the UE may receive the eDRS based on a corresponding format.

The foregoing mainly describes the solutions provided in this embodiment of this application from a perspective of the base station. It may be understood that, to implement the foregoing functions, the base station includes a corresponding hardware structure and/or software module for performing each of the functions. A person skilled in the art should easily be aware that, in combination with the examples described in the embodiments disclosed in this specification, units, algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application

In this embodiment of this application, division of functional modules may be performed on the base station based on the foregoing method examples. For example, the functional modules may be divided in correspondence to functions, or two or more functions may be integrated into one processing module. The foregoing integrated module may be implemented in a form of hardware, or may be implemented in a form of a software functional module. It should be noted that, in this embodiment of this application, module division is exemplary, and is merely a logical function division. In actual implementation, another division manner may be used.

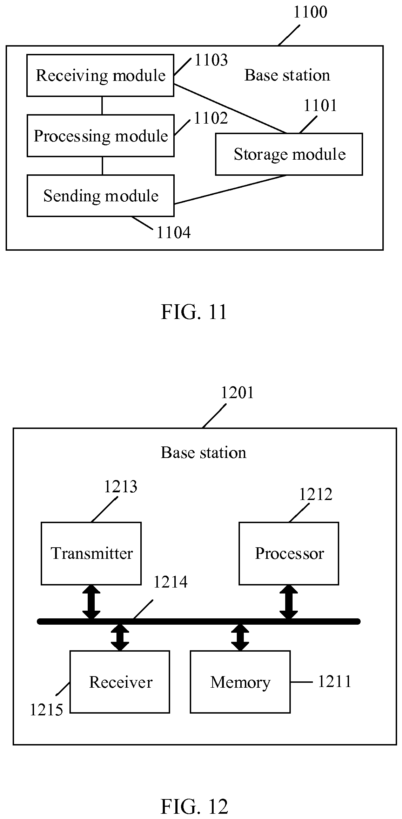

When an integrated unit is used, FIG. 11 is a possible schematic structural diagram of a base station related in the foregoing embodiment. A base station 1100 includes: a storage module 1101, a processing module 1102, a receiving module 1103, and a sending module 1104. The processing module 1102 is configured to control and manage an action of the base station. The receiving module 1103 and the sending module 1104 are configured to support the base station in communicating with another network entity, for example, communicating with UE. The storage module 1101 is configured to store program code and data of the base station.

In this embodiment of this application, the receiving module 1103 is configured to perform first carrier sense for first R subframes in a time sequence of one radio frame in a first discovery signal measurement timing DMTC window. The processing module 1102 is configured to determine whether the first carrier sense succeeds. If the first carrier sense succeeds, the sending module 1104 is configured to send a discovery signal in M consecutive subframes, where M is greater than or equal to 2, and a first subframe of the M consecutive subframes is located in one radio frame in the first DMTC window; and both M and R are natural numbers.

In a possible design, the first DMTC window includes N subframes, where if N is less than or equal to 11-M, R is less than or equal to N; or if N is greater than 11-M, R is less than or equal to 11-M.

In a possible design, discovery signals carried in subframes of the M consecutive subframes may be the same or different.

In a possible design, the first DMTC window includes the N subframes, and a subframe number is carried by first Q subframes in the M consecutive subframes, where Q is less than or equal to M; and if N is less than or equal to 11-Q, R is less than or equal to N; or if N is greater than 11-Q, R is less than or equal to 11-Q.

In a possible design, before the base station sends the discovery signal, the base station determines, based on the subframe number of the first Q subframes, a format of the discovery signal in the M consecutive subframes.

In a possible design, if the first carrier sense fails, the receiving module 1103 is configured to perform second carrier sense for a subframe, other than the first R subframes, in the time sequence of the radio frame in the first DMTC window, alternatively, perform the second carrier sense for a subframe, other than the first R subframes, in the first DMTC window.

In a possible design, if the second carrier sense succeeds, the sending module 1104 sends the discovery signal in the subframe in the first DMTC window.

In a possible design, the first DMTC window includes the N subframes; and if N is less than or equal to 11-Q, a start subframe in the M consecutive subframes is located in the N subframes; or if N is greater than 11-Q, the start subframe in the M consecutive subframes is in first 11-Q subframes in the radio frame, where a subframe number is carried by first Q subframes in the M consecutive subframes.

In a possible design, the first DMTC window includes one or more radio frames, or a part of one radio frame.

With reference to the foregoing method embodiments, for example, the receiving module 1103 is configured to support the base station in performing processes 801 and 803 in FIG. 8, and/or another process used for the technology described in this specification, the sending module 1104 is configured to support the base station in performing 802 in FIG. 8, and/or configured to perform another process of the technology described in this specification, and the processing module 1102 is configured to support the base station in determining that the first carrier sense succeeds or fails. The storage module 1101 is configured to store the program code and data that are used by the base station to perform processes 801 to 803.

The processing module 1102 may be a processor or a controller, such as a central processing unit (Central Processing Unit, CPU), a general-purpose processor, a digital signal processor (Digital Signal Processing, DSP), an application-specific integrated circuit (Application-Specific Integrated Circuit, ASIC), a field programmable gate array (Field Programmable Gate Array, FPGA), or another programmable logical device, a transistor logical device, a hardware component, or a combination thereof. The processing module 1102 may implement or execute various example logical blocks, modules, and circuits described with reference to content disclosed in this application. Alternatively, the processor may be a combination implementing a computing function, for example, a combination of one or more microprocessors, or a combination of the DSP and a microprocessor. The transceiver module 1303 may be a transceiver, a transceiver circuit, a communications interface, or the like. The storage module 1101 may be a memory.

When the processing module 1102 is a processor, the sending module 1104 is a transmitter, the receiving module 1103 is a receiver and transceiver, and the storage module 1101 is a memory, the base station in this embodiment of this application may be a base station shown in FIG. 12.

Referring to FIG. 12, the base station 1201 includes: a processor 1212, a transmitter 1213, a memory 1211, a bus 1214, and a receiver 1215. The transmitter 1213, the processor 1212, the receiver 1215, and the memory 1211 are connected to each other by using the bus 1214. The bus 1214 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 12, but this does not mean that there is only one bus or only one type of bus.

In this embodiment of this application, the receiver 1215 may be configured to measure, for a first discovery signal, first carrier sense in first R subframes in a time sequence of one radio frame in a timing DMTC window. If the first carrier sense succeeds, the transmitter 1213 is configured to send a discovery signal in M consecutive subframes, where M is greater than or equal to 2, and a first subframe of the M consecutive subframes is located in the radio frame in the first DMTC window.

Both M and R are natural numbers.

In a possible design, the first DMTC window includes N subframes; and if N is less than or equal to 11-M, R is less than or equal to N; or if N is greater than 11-M, R is less than or equal to 11-M.

In a possible design, discovery signals carried in subframes of the M consecutive subframes may be the same or different.

In a possible design, the first DMTC window includes N subframes; and a subframe number is carried by first Q subframes in the M consecutive subframes, where Q is less than or equal to M; and if N is less than or equal to 11-Q, R is less than or equal to N; or if N is greater than 11-Q, R is less than or equal to 11-Q.

In a possible design, before the base station sends the discovery signal, the base station determines, based on the subframe number of the first Q subframes, a format of the discovery signal in the M consecutive subframes.

In a possible design, if the first carrier sense fails, the receiving module 1215 is configured to perform second carrier sense for a subframe, other than the first R subframes, in a time sequence of one radio frame in the first DMTC window, alternatively, perform the second carrier sense for a subframe, other than the first R subframes, in the first DMTC window.

In a possible design, if the second carrier sense succeeds, the transmitter 1213 is configured to send the discovery signal in the subframe in the first DMTC window.

In a possible design, the first DMTC window includes N subframes; and if N is less than or equal to 11-Q, a start subframe in the M consecutive subframes is located in the N subframes; or if N is greater than 11-Q, the start subframe in the M consecutive subframes is in first 11-Q subframes in the radio frame, where the subframe number is carried by the first Q subframes in the M consecutive subframes.

In a possible design, the first DMTC window includes one or more radio frames, or a part of one radio frame.

With reference to the foregoing method embodiments, for example, the receiver 1215 is configured to support the base station in performing processes 801 and 803 in FIG. 8, and/or another process used for the technology described in this specification, the transmitter 1213 is configured to support the base station in performing 802 in FIG. 8, and/or configured to perform another process of the technology described in this specification, and the processor 1212 is configured to support the base station in determining that the first carrier sense succeeds or fails. The memory 1211 is configured to the store program code and data that are used by the base station to perform processes 801 to 803.

Method or algorithm steps described in combination with the content disclosed in this application may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and benefits of this application are further described in detail in the foregoing specific embodiments. It should be understood that the foregoing descriptions are merely specific embodiments of this application, but are not intended to limit the protection scope of this application. Any modification, equivalent replacement or improvement made based on technical solutions of this application shall fall within the protection scope of this application.

## Claims

1. A method for sending a discovery signal, comprising:
performing, by a base station, first carrier sense for first R subframes in a time sequence of one radio frame in a first discovery signal measurement timing DMTC window; and
if the first carrier sense succeeds, sending, by the base station, a discovery signal in M consecutive subframes, wherein M is greater than or equal to 2, and a first subframe of the M consecutive subframes is located in the radio frame in the first DMTC window; and
both M and R are natural numbers.

2. The method according to claim 1, wherein
the first DMTC window comprises N subframes; and
if N is less than or equal to 11-M, R is less than or equal to N; or
if N is greater than 11-M, R is less than or equal to 11-M.

3. The method according to claim 1 or 2, wherein
discovery signals carried in subframes of the M consecutive subframes may be the same or different.

4. The method according to claim 1, wherein
the first DMTC window comprises N subframes; and
a subframe number is carried by first Q subframes in the M consecutive subframes, wherein Q is less than or equal to M; and
if N is less than or equal to 11-Q, R is less than or equal to N; or
if N is greater than 11-Q, R is less than or equal to 11-Q.

5. The method according to claim 4, wherein the method further comprises:
before the base station sends the discovery signal, determining, by the base station, a format of the discovery signal in the M consecutive subframes based on the subframe number of the first Q subframes.

6. The method according to claim 1, wherein
if the first carrier sense fails, performing, by the base station, second carrier sense for a subframe, other than the first R subframes, in the time sequence of the radio frame in the first DMTC window, or performing, by the base station, the second carrier sense for a subframe, other than the first R subframes, in the first DMTC window.

7. The method according to claim 6, wherein
if the second carrier sense succeeds, sending, by the base station, the discovery signal in the subframe in the first DMTC window.

8. The method according to claim 1, wherein
the first DMTC window comprises N subframes; and
if N is less than or equal to 11-Q, a start subframe in the M consecutive subframes is in the N subframes; or if N is greater than 11-Q, the start subframe in the M consecutive subframes is in first 11-Q subframes in the radio frame, wherein a subframe number is carried by first Q subframes in the M consecutive subframes.

9. The method according to any one of claims 1 to 8, wherein
the first DMTC window comprises one or more radio frames, or a part of one radio frame.

10. A method for detecting a discovery signal, comprising:
detecting, by user equipment UE, a discovery signal in first R subframes of one radio frame in a first discovery signal measurement timing DMTC window, wherein the discovery signal is carried in M consecutive subframes, and M is greater than or equal to 2; and
a first subframe of the M consecutive subframes is located in the radio frame in the first DMTC window, and both M and R are natural numbers.

11. The method according to claim 10, wherein
the first DMTC window comprises N subframes; and
if N is less than or equal to 11-M, R is less than or equal to N; or
if N is greater than 11-M, R is less than or equal to 11-M.

12. The method according to claim 10, wherein
the first DMTC window comprises N subframes; and
a subframe number is carried by first Q subframes in the M consecutive subframes, wherein Q is less than or equal to M; and
if N is less than or equal to 11-Q, R is less than or equal to N; or
if N is greater than 11-Q, R is less than or equal to 11-Q.

13. The method according to claim 12, wherein the method further comprises:
determining, by the UE, a format of the M continuous subframes based on the subframe number of the first Q subframes.

14. A base station, comprising a receiver and a transmitter, wherein
the receiver is configured to perform first carrier sense for first R subframes in a time sequence of one radio frame in a first discovery signal measurement timing DMTC window; and
if the first carrier sense succeeds, the transmitter is configured to send a discovery signal in M consecutive subframes, wherein M is greater than or equal to 2, and a first subframe of the M consecutive subframes is located in the radio frame in the first DMTC window; and
both M and R are natural numbers.

15. The base station according to claim 14, wherein
the first DMTC window comprises N subframes; and
if N is less than or equal to 11-M, R is less than or equal to N; or
if N is greater than 11-M, R is less than or equal to 11-M.

16. The method according to claim 14 or 15, wherein
discovery signals carried in subframes of the M consecutive subframes may be the same or different.

17. The method according to claim 14, wherein
the first DMTC window comprises N subframes; and
a subframe number is carried by first Q subframes in the M consecutive subframes, wherein Q is less than or equal to M; and
if N is less than or equal to 11-Q, R is less than or equal to N; or
if N is greater than 11-Q, R is less than or equal to 11-Q.

18. The method according to 17, further comprising a processor, wherein
before the transmitter is configured to send the discovery signal, the processor is configured to determine a format of the discovery signal in the M consecutive subframes based on the subframe number carried by the first Q subframes.

19. The base station according to claim 14, wherein
if the first carrier sense fails, the receiver is configured to perform second carrier sense for a subframe, other than the first R subframes, in the time sequence of the radio frame in the first DMTC window, or the receiver is configured to perform the second carrier sense for a subframe, other than the first R subframes, in the first DMTC window.

20. The base station according to claim 19, wherein
if the second carrier sense succeeds, the transmitter is configured to send the discovery signal in the subframe in the first DMTC window.

21. The base station according to claim 14, wherein
the first DMTC window comprises N subframes; and
if N is less than or equal to 11-Q, a start subframe in the M consecutive subframes is in the N subframes; or if N is greater than 11-Q, the start subframe in the M consecutive subframes is in first 11-Q subframes in the radio frame; and
a subframe number is carried by first Q subframes in the M consecutive subframes.

22. The base station according to any one of claims 14 to 21, wherein
the first DMTC window comprises one or more radio frames, or a part of one radio frame.

23. User equipment (UE), comprising a receiver and a transmitter, wherein
the receiver is configured to detect a discovery signal in first R subframes of one radio frame in a first discovery signal measurement timing DMTC window, wherein the discovery signal is carried in M consecutive subframes, and M is greater than or equal to 2; and
a first subframe of the M consecutive subframes is located in the radio frame in the first DMTC window, and both M and R are natural numbers.

24. The UE according to claim 23, wherein
the first DMTC window comprises N subframes; and
if N is less than or equal to 11-M, R is less than or equal to N; or
if N is greater than 11-M, R is less than or equal to 11-M.

25. The UE according to claim 23, wherein
the first DMTC window comprises N subframes; and
a subframe number is carried by first Q subframes in the M consecutive subframes, wherein Q is less than or equal to M; and
if N is less than or equal to 11-Q, R is less than or equal to N; or
if N is greater than 11-Q, R is less than or equal to 11-Q.

26. The UE according to claim 25, wherein
the receiver is configured to receive the discovery signal; and
the UE further comprises a processor, wherein the processor is configured to determine a format of the M consecutive subframes based on the subframe number of the first Q subframes.

27. A computer-readable storage medium, wherein the computer-readable medium stores a computer program, and when the program is executed by a processor, the method according to any one of claims 1 to 13 is implemented.

28. A computer program product, wherein when the computer program product is run on a computer, the computer is enabled to perform the method according to any one of claims 1 to 13.
